# EUROPÄISCHE PATENTSCHRIFT

(11) **EP 1 745 951 B1**
(45) Veröffentlichungstag und Bekanntmachung des Hinweises auf die Patenterteilung: **12.08.2009**
(21) Anmeldenummer: 06116382.0
(22) Anmeldetag: 30.06.2006
(51) Int. Cl.: B60G 11/26, B60G 11/27, F16F 9/02, F16F 9/06, F16F 9/32, F16F 9/52

(54) **Federungseinrichtung für Kraftfahrzeuge**
Spring device for a vehicle
Dispositif de ressort pour véhicule

(30) Priorität: 18.07.2005 DE 202005011439 U
(43) Veröffentlichungstag der Anmeldung: 24.01.2007
(73) Patentinhaber: HEMSCHEIDT FAHRWERKTECHNIK GmbH & Co. KG, 42781 Haan-Gruiten (DE)
(72) Erfinder: Runkel, Walter, 53547, Leubsdorf (DE)
(74) Vertreter: Patentanwälte Dr. Solf & Zapf

(56) Entgegenhaltungen:
- EP-A- 0 425 885
- EP-A- 0 677 679
- DE-A1- 1 802 193
- DE-A1- 3 027 124

## Beschreibung

Die vorliegende Erfindung betrifft eine Federungseinrichtung nach dem Oberbegriff des Anspruchs 1 zur eine Last tragenden und federnden Rad-Abstützung in einem Kraftfahrzeug:

Eine derartige Federungseinrichtung ist beispielsweise durch die EP 0 425 885 B1 bekannt (Ausführungen ab Figur 5). Dabei handelt es sich um ein hydropneumatisches Federungssystem, wobei der Zylinderraum und der Ringraum des Federzylinders mit jeweils einem hydropneumatischen Federspeicher verbunden sind, so dass jeweils ein pneumatischer Druck mittelbar über ein hydraulisches Medium beidseitig auf den Kolben des Federzylinders wirkt. Dadurch entstehen zwei gegensinnig auf den Kolben wirkende Kräfte, aus deren Differenz sich eine Tragkraft zur Abstützung der Last ergibt.
Dieses bekannte Federungssystem hat sich in der Praxis gut bewährt. Pneumatische Federzungen sind aber stets mit dem Nachteil behaftet, dass Temperaturänderungen einen recht starken Einfluss auf den Druck eines pneumatischen Federmediums haben, so dass sich die Trag- und Federeigenschaften ebenfalls temperaturabhängig ändern. Dies gilt auch für das Fahrzeug-Niveau im statischen Zustand. Bei dem Federungssystem gemäß EP 0 425 885 B1 wird dieser Temperatureinfluss zwar etwas verringert, weil zwei Drücke gegensinnig auf den Kolben des Federzylinders wirken.
Dennoch besteht noch ein Verbesserungsbedarf..

Das Dokument DE 30 27 124 A1 beschreibt einen Stoßdämpfer insbesondere für Flugzeugfahrwerke, etwa für Hubschrauber. Dabei steht die spezielle Problematik im Vordergrund, einen "Aufhängungsstoßdämpfer" für ein Landen im Katastrophenfall, d. h. für eine Bruchlandung auszulegen, wobei eine senkrechte Aufprallgeschwindigkeit in der Größenordnung von 10 bis 12 m/s auftritt. Von der oben beschriebenen Problematik einer Temperaturabhängigkeit von Trag- und Federungseigenschaften ist in dem Dokument nichts enthalten. Konstruktiv besteht der bekannte Aufhängungsstoßdämpfer aus einem Zylinder, einem Dämpferkolben und einer mit dem Kolben verbunden Dämpferstange, bei der es sich folglich um eine aus dem Zylinder nach außen geführte Kolbenstange handelt. In einigen Ausführungsformen ist innerhalb des Zylinders in einem erweiterten Unterteil ein zusätzlicher beweglicher Boden angeordnet, der mit einer Gegenstange verbunden ist. Der Boden trennt eine Hochdruckkammer für Gas im erweiterten Teil des Zylinders ab. In weiteren Ausführungen ist die Gegenstange mit einem fest als Zwischenwandung im Zylinder angeordneten Boden verbunden. In allen Fällen gleitet der Dämpferkolben mit einer Öffnung auf der mit dem beweglichen oder festen Boden verbundenen Gegenstange.

Der vorliegenden Erfindung liegt die Aufgabe zugrunde, eine Federungseinrichtung der genannten Art so zu verbessem, dass die Gebrauchseigenschaften - praktisch unabhängig von Temperaturschwankungen sind. Dies gilt vor allem für eine statische Niveaulage des Federzylinders, damit das jeweilige Fahrzeug-Niveau bei unterschiedlichen Temperaturen praktisch konstant bleibt.

Erfindungsgemäß wird dies durch die Merkmale des Anspruchs 1 erreicht. Vorteilhafte Ausgestaltungsmerkmale sind in den abhängigen Ansprüchen enthalten.

Demnach ist erfindungsgemäß vorgesehen, dass im Bereich der Kolbenstange des Federzylinders ein Zusatzfederzylinder derart angeordnet ist, dass die Kolbenstange teleskopartig längenveränderbar ist. Der Zusatzfederzylinder besteht aus einem Zusatzzylinder und einem darin geführten Zusatzkolben mit einer nach außen geführten Zusatzkolbenstange, wobei der Zusatzfederzylinder mit diesen Bestandteilen einen Teil der Kolbenstange bildet. Bevorzugt ist dabei der Zusatzzylinder mit dem kolbenseitigen Teil der Kolbenstange fest (starr) verbunden, während die nach außen geführte Zusatzkolbenstange mit ihrem freien Ende praktisch des Ende der längenvariablen Kolbenstange bildet und dazu ein endseitiges Verbindungselement zur fahrzeugseitigen Montageverbindung aufweist. Die Anordnung des Zusatzfederzylinders kann aber auch umgekehrt sein, d. h. die Zusatzkolbenstange kann mit der Kolbenstange verbunden sein und der Zusatzzylinder mit dem Verbindungselement zum Fahrzeug hin.

Erfindungsgemäß ist hierbei der Zusatzfederzylinder zumindest mit einem Gegendruck eines elastisch kompressiblen, insbesondere pneumatischen Gegenfedermediums beaufschlagt, und zwar im Bereich eines Zusatz-Ringraums und/oder eines Zusatz-Arbeitsraumes. Aufgrund dieser konstruktiven Ausgestaltung ist es möglich, in Abhängigkeit von der im jeweiligen Anwendungsfall auftretenden Last den Arbeitsdruck, den Gegendruck sowie die jeweiligen, von diesen Drücken beaufschlagten Flächen des Kolbens und des Zusatzkolbens derart auszulegen, dass in einem statischen, mit der Last beaufschlagten Zustand einerseits der Kolben in einem Ausfederungsendanschlag relativ zu dem Zylinder und andererseits der Zusatzkolben in einem Einfederungsendanschlag relativ zu dem Zusatzzylinder stehen. In dieser statischen Stellung können bei einem Temperaturanstieg die dadurch ebenfalls zunehmenden Drücke vorteilhafterweise nicht zu einer Änderung des statischen Niveaus führen. Bei einem dynamischen Einfedern aus der statischen Lage wird nur der Kolben gegen den Arbeitsdruck in den Zylinder hineinbewegt, während der Zusatzkolben in seinem Einfederungsendanschlag im Zusatzzylinder stehen bleibt. Im Falle eines dynamischen Ausfederns aus der statischen Lage heraus steht der Kolben in seinem Ausfederungsendanschlag, und nur der Zusatzkolben bewegt sich mit der Zusatzkolbenstange in Ausfederungsrichtung im Zusatzzylinder.

Anhand von in der Zeichnung veranschaulichten, bevorzugten Ausführungsbeispielen soll die Erfindung genauer erläutert werden. Dabei zeigen:
- Fig. 1: eine erste Ausführungsform einer erfindungsgemäßen Federungseinrichtung in Axialschnittdarstellung der Komponenten, und zwar in einer statischen Lage,
- Fig. 2: die Federungseinrichtung gemäß Fig. 1 in einem aus der statischen Lage heraus eingefederten Zustand und
- Fig. 3: eine Variante der Federungseinrichtung gemäß Fig. 1 in einem aus der statischen Lage heraus ausgefederten Zustand,
- Fig. 4: eine weitere Variante der Federungseinrichtung in einem bestimmten Federungszustand und
- Fig. 5: eine Variante zur Ausführung gemäß Fig. 4 in einer entsprechenden Stellung.

In den verschiedenen Figuren der Zeichnungen sind gleiche bzw. sich funktionell entsprechende Teile und Komponenten stets mit den gleichen Bezugszeichen versehen.

Eine erfindungsgemäße Federungseinrichtung 1 besteht aus (mindestens) einem Federzylinder 2, der seinerseits teleskopartig aus einem Zylinder 4 und einem darin linear verschiebbar geführten Kolben 6 mit einer Kolbenstange 8 besteht. Die Kolbenstange 8 ist einseitig umfangsgemäß abgedichtet aus dem Zylinder 4 nach außen geführt. Der Federzylinder 2 ist zur direkten Anordnung zwischen einer ungefederten Masse (Fahrzeugrad bzw. Achse) und einer gefederten Masse (Fahrzeugrahmen bzw. Karosserieaufbau) vorgesehen. Dazu weisen der Zylinder 4 und die Kolbenstange 8 an ihren gegenüberliegenden, voneinander entfernten Enden geeignete Verbindungselemente 10 auf.

Der Kolben 6 liegt über (mindestens) eine Umfangsdichtung an der Innenfläche des Zylinders 4 an. Dadurch trennt der Kolben 6 innerhalb des Zylinders 4 einen zylindrischen Arbeitsraum 12 von einem die Kolbenstange 8 umschließenden Ringraum 14. Auf der Seite des Arbeitsraumes 12 wirkt der Kolben 6 mit seiner diesem zugewandten Arbeitsfläche A1 zur Erzeugung einer die jeweilige Last tragenden Tragfederkraft F gegen einen Arbeitsdruck p_{A} eines elastisch kompressiblen, insbesondere pneumatischen Federmediums FM (beispielsweise Stickstoff).

Erfindungsgemäß ist die Kolbenstange 8 über einen Zusatzfederzylinder 16 teleskopartig längenvariabel ausgebildet. Dabei ist der Zusatzfederzylinder 16 mit zumindest einem Gegendruck p_{G} eines elastisch kompressiblen, insbesondere ebenfalls pneumatischen Gegenfedermediums GM beaufschlagt.

Der Zusatzfederzylinder 16 besteht aus einem Zusatzzylinder 18 und einem darin relativbeweglich geführten Zusatzkolben 20 mit einer umfänglich abgedichtet aus dem Zusatzzylinder 18 nach außen geführten Zusatzkolbenstange 22. In den bevorzugten Ausführungen ist der Zusatzzylinder 18 starr mit der Kolbenstange 8 des Federzylinders 2 verbunden, während die Zusatzkolbenstange 22 an ihrem freien Ende das Verbindungselement 10 zur fahrzeugseitigen Montageverbindung aufweist.

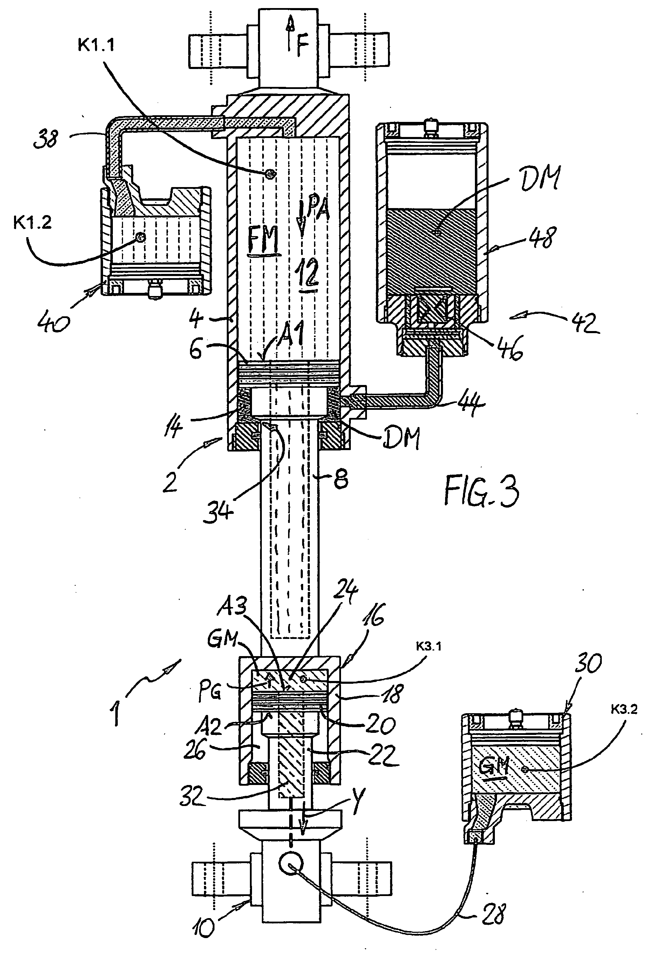

Der Zusatzkolben 20 liegt über eine bevorzugt aus mehreren Dichtringen bestehende Umfangsdichtung auf der Innenwandung des Zusatzzylinders 18 an und trennt dadurch innerhalb des Zusatzzylinders 18 einen zylindrischen Zusatz-Arbeitsraum 24 (siehe hierzu Fig. 3 bis 5) von einem die Zusatzkolbenstange 22 umschließenden Zusatz-Ringraum 26.

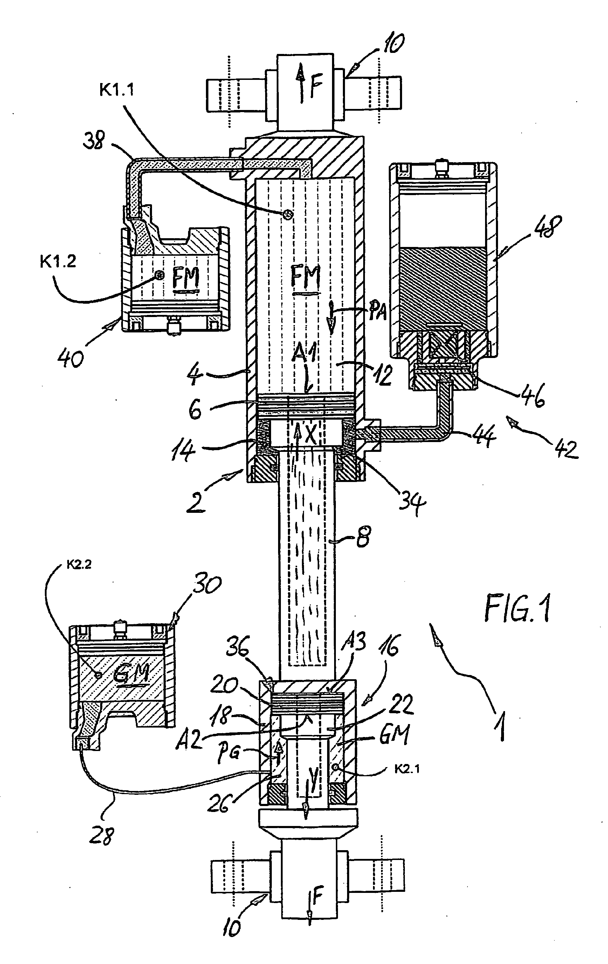

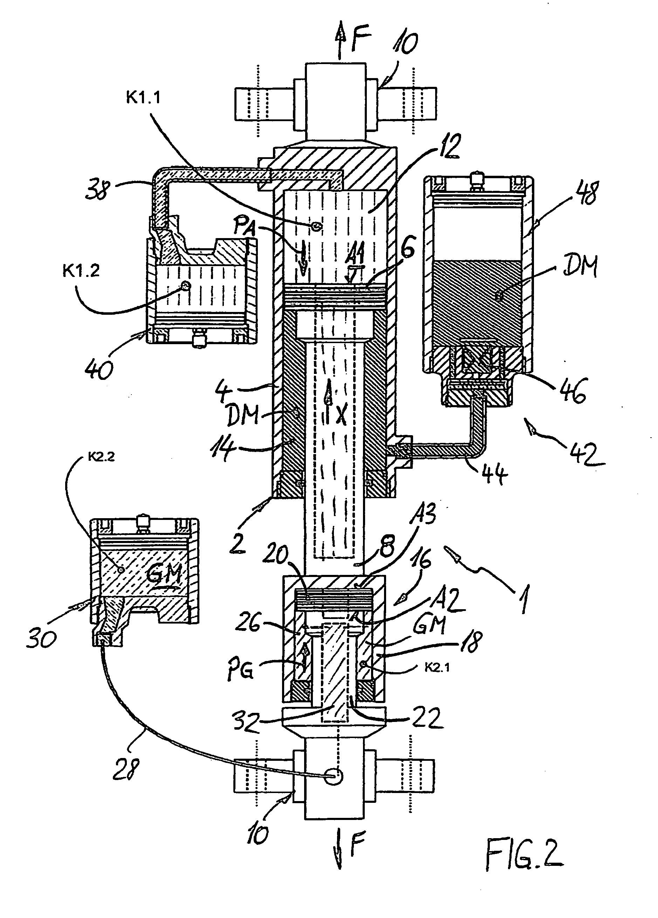

In der Ausführung gemäß Fig. 1 und 2 ist der Zusatz-Ringraum 26 unmittelbar mit dem Gegenfedermedium GM beaufschlagt und dabei vorzugsweise zusätzlich über eine Leitung 28 mit einem externen Speicher 30 verbunden. Gemäß Fig. 1 mündet die Leitung 28 durch eine radiale Öffnung in der Wandung des Zusatzzylinders 18 direkt in den Zusatz-Ringraum 26, während in der Variante gemäß Fig. 2 die Leitung 28 über nur angedeutete Kanäle bzw. Bohrungen des Verbindungselementes 10 bzw. der Zusatzkolbenstange 22 in einen Hohlraum 32 der Zusatzkolbenstange 22 mündet. Dieser Hohlraum ist über ebenfalls nur angedeutete radiale Querbohrungen der Zusatzkolbenstange 22 mit dem Zusatz-Ringraum 26 verbunden.

Bei der Ausführungsvariante gemäß Fig. 3 ist der Zusatz-Arbeitsraum 24 unmittelbar mit dem Gegenfedermedium GM und auch hierbei vorzugsweise über eine Leitung 28 mit einem externen Speicher 30 verbunden. Die Leitung 28 mündet ähnlich wir in Fig. 2 in einem Hohlraum 32 der Zusatzkolbenstange 22, wobei aber der Hohlraum 32 axial in Richtung des Zusatz-Arbeitsraumes 24 offen ist.

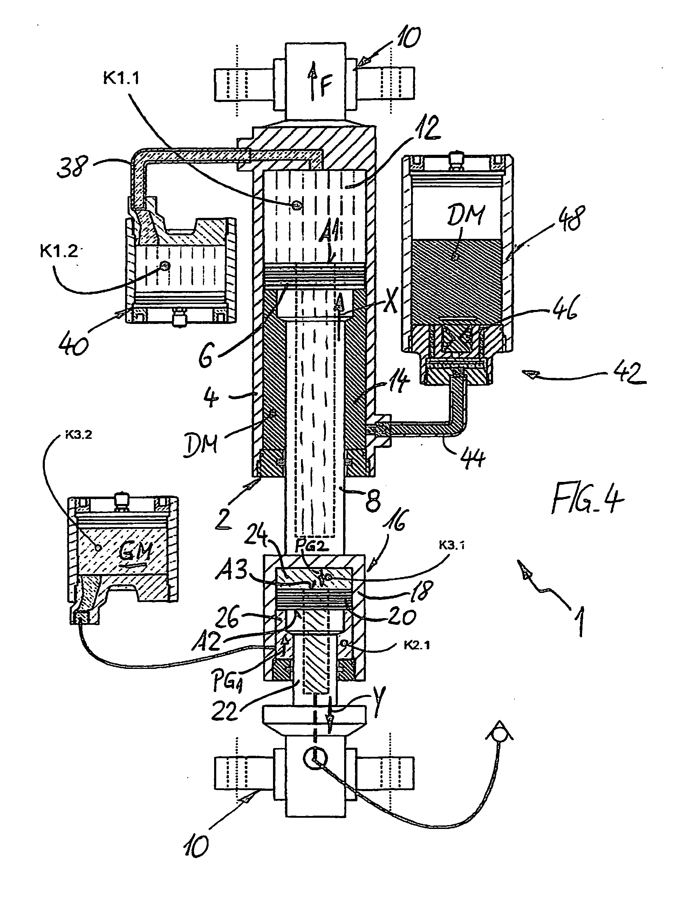

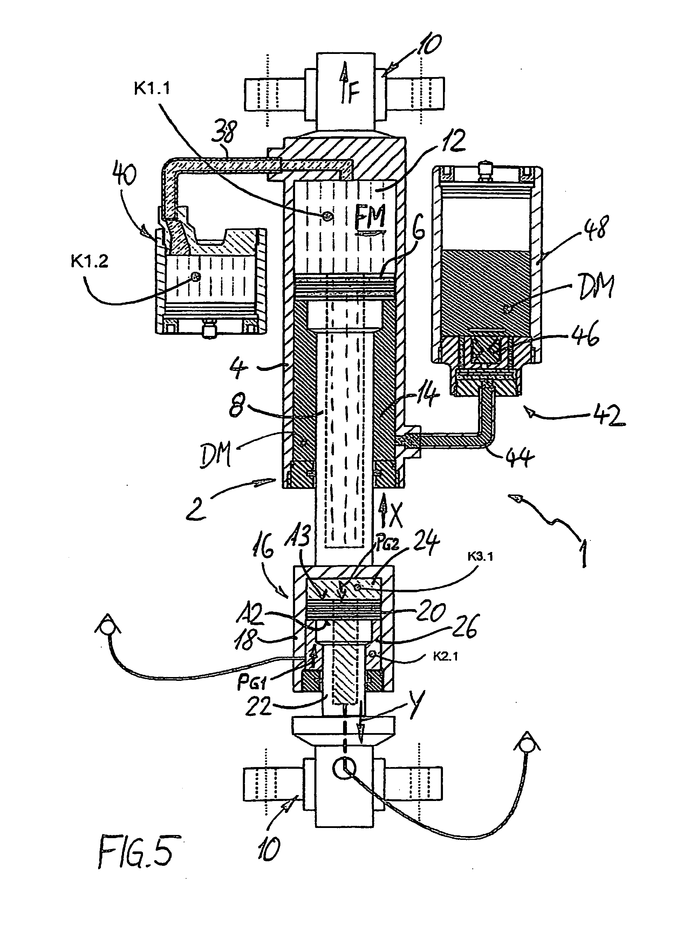

In den Ausführungen gemäß Fig. 4 und 5 sind sowohl der Zusatz-Arbeitsraum 24 als auch der Zusatz-Ringraum 26 mit dem Gegenfedermedium GM beaufschlagt. Dabei ergibt sich eine resultierende Kraft aus der Differenz zweier entgegengerichteter, aus den Drücken p_{G1} und p_{G2} resultierender Teilkräfte.

Der Zusatzkolben 20 weist auf der Seite des Zusatz-Ringraums 26 eine mit Druck beaufschlagbare Ringfläche A2 auf, und auf der Seite des Zusatz-Arbeitsraums 24 ist seine gesamte Stirnfläche A3 mit Druck beaufschlagbar.

Erfindungsgemäß ist hierbei vorgesehen, in Abhängigkeit von der im jeweiligen Anwendungsfall zu erwartenden Last den Arbeitsdruck p_{A}, den Gegendruck p_{G} (bzw. p_{G1}, p_{G2}) sowie die jeweiligen, von diesen Drücken beaufschlagten Flächen A1 sowie A2 und/oder A3 des Kolbens 6 und des Zusatzkolbens 20 derart auszulegen, dass in dem in Fig. 1 veranschaulichten statischen Zustand einerseits der Kolben 6 in einem Ausfederungsendanschlag 34 relativ zum Zylinder 4 und andererseits der Zusatzkolben 20 in einem Einfederungsendanschlag 36 relativ zum Zusatzzylinder 18 stehen. Dabei wird der Ausfederungsendanschlag 34 durch eine Ringstufe der Kolbenstange 8 gebildet, die an einem Ringbund des Zylinders 4 zur Anlage kommt. In dem Einfederungsendanschlag 36 liegt der Zusatzkolben 20 mit seiner Stirnfläche A3 im Zusatzzylinder 18 an.

Wenn aus der statischen Lage gemäß Fig. 1 heraus der Federzylinder 2 gemäß Fig. 2 dynamisch einfedert, wird über die Kolbenstange 8 nur der Kolben 6 in dem Zylinder 4 gegen den Arbeitsdruck p_{A} bewegt. Der Zusatzkolben 20 bleibt in seinem Einfederungsendanschlag 36 stehen. Beim Einfedern in Pfeilrichtung X wirkt auf den Kolben 6 somit nur die eigentliche Tragfederkraft F=p_{A} · A1.

In Fig. 3 ist ein dynamisches Ausfedern aus der statischen Lage heraus dargestellt. Dabei bleibt der Kolben 6 in seinem Ausfederungsendanschlag 34 im Zylinder 4 stehen. Es bewegt sich ausschließlich der Zusatzkolben 20 mit der Zusatzkolbenstange 22 in Pfeilrichtung Y in Ausfederungsrichtung. Wenn gemäß Fig. 1 und 2 der Zusatz-Ringraum 26 mit dem Gegenfedermedium GM beaufschlagt ist, steigt beim Ausfedern die Gegenkraft p_{G} durch Kompression an, was zu einer Ausfederungsdämpfung führt. Bei den Ausführungen gemäß Fig. 4 und 5 hängt die Wirkung vom Verhältnis der jeweiligen Drücke in den Räumen 24 und 26 ab.

Bei den dargestellten, bevorzugten Ausführungen ist der Arbeitsraum 12 des Zylinders 4 unmittelbar mit dem kompressiblen Federmedium FM gefüllt. Vorzugsweise ist dabei der Arbeitsraum 12 über eine Leitung 38 mit einem externen Speicher 40 verbunden, wobei der Arbeitsraum 12 ein erstes Volumen K1.1 des Federmediums FM und der Speicher 40 ein zweites Volumen K1.2 des Federmediums FM enthalten. Ferner ist bevorzugt auch das Gegenfedermedium GM mit einem ersten Volumen K2.1 im Zusatz-Ringraum 26 und mit zweiten Volumen K2.2 im Speicher 30 (Fig. 1, 2) bzw. mit einem ersten Volumen K3.1 im Zusatz-Arbeitsraum 24 und einem zweiten Volumen K3.2 im Speicher 30 (Fig. 3, 4) angeordnet.

Alternativ zu diesen bevorzugten Ausführungen wäre auch jeweils eine mittelbare Druckbeaufschlagung über ein hydraulisches Medium möglich (hydropneumatische Ausführung).

In den bevorzugten Ausführungen ist der die Kolbenstange 8 innerhalb des Zylinders 4 umschließende Ringraum 14 vorteilhafterweise Bestandteil einer hydraulischen Dämpfungseinrichtung 42. Dazu ist der Ringraum 14 mit einem hydraulischen Dämpfungsmedium DM gefüllt und über eine Leitung 44 und ein Dämpfungsventil 46 mit einem externen Speicher 48 verbunden. Anhand der Fig. 1 und 2 läßt sich nachvollziehen, dass es bei dynamischen Federungsbewegungen des Kolbens 6 zu Volumenänderungen des Ringraums 14 kommt, so dass jeweils Hydraulikmedium DM über das Dämpfungsventil 46 strömt. Durch geeignete Auslegung des Dämpfungsventils 46 können unterschiedliche Dämpfungskräfte beim Ein- und Ausfedern erreicht werden.

Alternativ könnte auch der Ringraum 14 belüftet, d. h. mit der Atmosphäre verbunden und dadurch grundsätzlich funktionslos sein.

Die Erfindung führt u. a. zu dem Vorteil, dass die Federarbeit auf zwei pneumatische Federn aufgeteilt wird. Dadurch hat das jeweilige Federvolumen eine "Ruhepause", wenn die Bewegung gerade im Bereich des jeweils anderen Volumens stattfindet. Hierdurch wird die Temperatur des jeweiligen Mediums vorteilhaft gering gehalten, da jedes Volumen weniger komprimiert wird.

Zur Ausführung gemäß Fig. 3 ist noch zu erwähnen, dass der Druck des Volumens K3.1 so eingestellt werden kann, dass dieser Druck durch Beaufschlagung der Fläche A3 des Zusatzkolbens 20 eine Kraft ergibt, die gleich der aus dem Druck p_{A} des Volumens K1.1 im Arbeitsraum 12 resultierenden Kraft auf den Kolben 6 in der statischen Lage ist. Hierdurch kann sich vorteilhafterweise der Zusatzkolben 20 beim Einfedern nahezu stoßfrei an den mechanischen Einfederungsendanschlag 36 anlegen.

Die Ausführung gemäß Fig. 4 stellt praktisch eine Kombination der vorhergehenden Ausführungen gemäß Fig. 1 bis 3 dar. Hierdurch kann ebenfalls eine Ausdehnung reduziert und der mechanische Stoß minimiert werden. In Fig. 5 ist veranschaulicht, dass auch eine Ausführung ohne zusätzliche Speicher im Bereich des Zusatzfederzylinders 16 möglich ist. Dabei sind die Volumina K2.1 und/oder K3.1 lediglich in den Räumen 26, 24 eingeschlossen (gekammert). Wie sich aus den Darstellungen in Fig. 4 und 5 ergibt, kann in Abweichung von der statischen Lage nach Fig. 1 auch eine Druckauslegung derart vorgesehen sein, dass Kolben 6 und Zusatzkolben 20 in der statischen Lage "schwebend", d. h. von den mechanischen Anschlägen 34, 36 beabstandet angeordnet sind.

## Patentansprüche

1. Federungseinrichtung (1) zur eine Last tragenden und federnden Rad-Abstützung in einem Kraftfahrzeug, bestehend aus mindestens einem Federzylinder (2) mit einem in einem Zylinder (4) relativbeweglich geführten Kolben (6), der einseitig eine aus dem Zylinder (4) nach außen geführte Kolbenstange (8) aufweist, wobei der Kolben (6) innerhalb des Zylinders (4) einen zylindrischen Arbeitsraum (12) von einem die Kolbenstange (8) umschließenden Ringraum (14) trennt, und wobei der Kolben (6) auf der Seite des Arbeitsraums (12) zur Erzeugung einer die Last tragenden Tragfederkraft (F) gegen einen Arbeitsdruck (p_{A}) eines elastisch kompressiblen, insbesondere pneumatischen Federmediums (FM) wirkt,
**dadurch gekennzeichnet, dass** die Kolbenstange (8) über einen Zusatzfederzylinder (16) teleskopartig längenvariabel ist, indem der Zusatzfederzylinder (16) einen in einem Zusatzzylinder (18) relativbeweglich geführten Zusatzkolben (20) mit einer aus dem Zusatzzylinder (18) nach auß geführten Zusatzkolbenstange (22) aufweist, wobei der Zusatzfederzylinder (16) zumindest mit einem Gegendruck (p_{G}; p_{G1}, p_{G2}) eines elastisch kompressiblen, insbesondere pneumatischen Gegenfedermediums (GM) beaufschlagt ist.

2. Fedenrngseinrichtung nach Anspruch 1.
**dadurch gekennzeichnet, dass** der Zusatzzylinder (18) starr mit der Kolbenstange (8) des Federzylinders (2) und die Zusatzkolbenstange (22) an ihrem freien Ende mit einem Verbindungselement (10) zur fahrzeugseitigen Montageverbindung verbunden sind.

3. Fedenrngseinrichtung nach Anspruch 1 oder 2,
**dadurch gekennzeichnet, dass** derZusatzkolben(20) innerhalb des Zusatzzylinders (18) einen zylindrischen Zusatz-Arbeitsraum (24) von einem Zusatz-Ringraum (26) trennt

4. Federungseinrichtung nach Anspruch 3,
**dadurch gekennzeichnet, dass** der Zusatz-Ringraum (26) - insbesondere unmittelbar-mit dem Gegenfedertnedium (GM) beaufschlagt ist

5. Federungseinrichtung nach Anspruch 3,
**dadurch gekennzeichnet, dass** der Zusatz-Arbeitsraum (24) - insbesondere unmittelbar-mit dem Gegenfedermedium (GM) beaufschlagt ist

6. Federungseinrichtung nach Anspruch 3.
**dadurch gekennzeichnet, dass** sowohl der Zusatz-Arbeitsraum (24) als auch der Zusatz-Ringraum (26) - insbesondere jeweils unmittelbar - mit Gegenfedermedium (GM) beaufschlagt sind.

7. Federungseinrichtung nach einem der Ansprüche 1 bis 6,
**gekennzeichnet durch** eine von der Last abhängige Auslegung des Arbeitsdrucks (p_{A}), des Gegendruckes (p_{G}; p_{G1}, p_{G2}) und der jeweiligen, von diesen Drücken beaufschlagte Flächen (A1 sowie A2 und/oder A3) des Kolbens (6) und des Zusatzkolbens (20) derart, dass in einem statischen, mit der Last beaufschlagten Zustand einerseits der Kolben (6) in einem Ausfederungsendanschlag (34) relativ zum Zylinder (4) und/oder andererseits der Zusatzkolben (20) in einem Einfederungsendanschlag (36) relativ zum Zusatzzylinder (18) stehen.

8. Federungseinrichtung nach einem der Ansprüche 3 bis 7,
**dadurch gekennzeichnet, dass** der Zusatz-Ringraum (26) und/oder der Zusatz-Arbeitsraum (24) mit einem bzw. jeweils einem externen Speicher (30) verbunden sind/ist.

9. Federungseinrichtung nach einem der Ansprüche 1 bis 8,
**dadurch gekennzeichnet, dass** der Ringraum (14) des Federrylinders (2) Teil einer hydraulischen Dämpfungseinrichtung (38) ist.

10. Federungseinrichtung nach Anspruch 9.
**dadurch gekennzeichnet, dass** derRingraum(14)miteinem hydraulischen Dämpfungsmedium (DM) gefüllt und Ober eine Leitung (44) und ein Dämpfungsventil (46) mit einem externen Speicher (48) verbunden ist.

11. Federungseinrichtung nach einem der Ansprüche 1 bis 8,
**dadurch gekennzeichnet, dass** der Ringraum (14) des Federzylinders (2) belüftet ist.

## Claims

1. A suspension device (1) for the load-bearing and resilient wheel support in a motor vehicle, consisting of at least one spring cylinder (2) with a piston (6), guided in a cylinder (4) in a manner that it can execute relative motion, which at one end has a piston rod (8) guided outwards out of the cylinder (4), wherein within the cylinder (4), the piston (6) separates a cylindrical working chamber (12) from an annular chamber (14) surrounding the piston rod (8), and wherein at the end closest to the working chamber (12), the piston (6) acts against a working pressure (p_{A}) of a resiliently compressible, in particular pneumatic, spring medium (FM) in order to generate a load-bearing supporting spring-force (F), **characterised in that** the piston rod (8) is, via an additional spring cylinder (16), variable in length telescopically by the additional spring cylinder (16) having an additional piston (20), guided in an additional cylinder (18) in a manner that it can execute relative motion, with an additional piston rod (22) guided outwards out of the additional cylinder (18), the additional spring cylinder (16) being at least acted upon by a counter pressure (p_{G}; p_{G1}, p_{G2}) of a resiliently compressible, in particular pneumatic, counter spring medium (GM).

2. A suspension device according to claim 1, **characterised in that** the additional cylinder (18) is rigidly connected to the piston rod (8) of the spring cylinder (2) and the free end of the additional piston rod (22) is connected to a connecting member (10) for installed connection to the vehicle.

3. A suspension device according to claim 1 or 2, **characterised in that** within the additional cylinder (18), the additional piston (20) separates a cylindrical additional working chamber (24) from an additional annular chamber (26).

4. A suspension device according to claim 3, **characterised in that** the additional annular chamber (26) is acted upon by the counter spring medium (GM), in particular directly.

5. A suspension device according to claim 3, **characterised in that** the additional working chamber (24) is acted upon by the counter spring medium (GM), in particular directly.

6. A suspension device according to claim 3, **characterised in that** both the additional working chamber (24) and the additional annular chamber (26) are acted upon by a counter spring medium (GM), in particular directly in each case.

7. A suspension device according to any one of claims I to 6, **characterised by** a load-dependent configuration of the working pressure (p_{A}), the counter pressure (p_{G}; p_{G1}, p_{G2}) and the respective surfaces (A1 as well as A2 and/or A3), of the piston (6) and the additional piston (20), acted upon by these pressures, in such a manner that, in a static state acted upon by the load, on the one hand the piston (6) is in a rebound end stop (34) relative to the cylinder (4) and/or on the other hand the additional piston (20) is in a compression end stop (36) relative to the additional cylinder (18).

8. A suspension device according to any one of claims 3 to 7, **characterised in that** the additional annular chamber (26) and/or the additional working chamber (24) is/are connected to one or a respective external accumulator (30).

9. A suspension device according to any one of claims 1 to 8, **characterised in that** the annular chamber (14) of the spring cylinder (2) is part of an hydraulic damping device (38).

10. A suspension device according to claim 9, **characterised in that** the annular chamber (14) is filled with an hydraulic damping medium (DM) and is connected to an external accumulator (48) via a line (44) and a damping valve (46).

11. A suspension device according to any one of claims 1 to 8, **characterised in that** the annular chamber (14) of the spring cylinder (2) is aerated.

## Revendications

1. Dispositif de suspension (1) pour un système de support de roue, porteur de charge et monté sur ressorts, dans un véhicule automobile, composé d'au moins un vérin de suspension (2) comprenant un piston (6) guidé en mouvement relatif dans un cylindre (4), ledit piston présentant d'un côté une tige de piston (8) amenée à sortir du cylindre (4), dans lequel le piston (6) sépare à l'intérieur du cylindre (4) un espace de travail cylindrique (12) d'un espace annulaire (14) entourant la tige de piston (8), et dans lequel le piston (6) agit du côté de l'espace de travail (12) pour générer une force élastique de suspension (F) portant la charge à l'encontre d'une pression de travail (p_{A}) d'un milieu faisant ressort (FM) élastiquement compressible, en particulier pneumatique,
**caractérisé en ce que** la tige de piston (8) est variable en longueur télescopiquement par l'intermédiaire d'un vérin de suspension supplémentaire (16), **en ce que** le vérin de suspension supplémentaire (16) présente un piston supplémentaire (20), guidé en mouvement relatif dans un cylindre supplémentaire (18), avec une tige de piston supplémentaire (22) amenée à sortir du cylindre supplémentaire (18), et **en ce que** le cylindre de suspension supplémentaire (16) est sollicité au moins par une contre-pression (p_{G} p_{G1}, p_{G2}) d'un milieu élastiquement antagoniste (GM), ce milieu étant élastiquement compressible, en particulier pneumatique.

2. Dispositif de suspension selon la revendication 1, **caractérisé en ce que** le cylindre supplémentaire (18) est relié rigidement à la tige de piston (8) du vérin de suspension (2) et la tige de piston supplémentaire (22) est reliée à son extrémité libre à un élément de raccordement (10) pour un raccordement de montage côté véhicule.

3. Dispositif de suspension selon la revendication 1 ou 2,
**caractérisé en ce que** le piston supplémentaire (20) sépare à l'intérieur du cylindre supplémentaire (18) un espace de travail cylindrique supplémentaire (24) d'un espace annulaire supplémentaire (26).

4. Dispositif de suspension selon la revendication 3, **caractérisé en ce que** l'espace annulaire supplémentaire (26) est mis sous charge, en particulier directement, par le milieu élastiquement antagoniste (GM).

5. Dispositif de suspension selon la revendication 3, **caractérisé en ce que** l'espace de travail supplémentaire (24) est mis sous charge, en particulier directement, par le milieu élastiquement antagoniste (GM).

6. Dispositif de suspension selon la revendication 3, **caractérisé en ce qu'**aussi bien l'espace de travail supplémentaire (24) que l'espace annulaire supplémentaire (26) sont mis sous charge, en particulier respectivement directement, par le milieu élastiquement antagoniste (GM).

7. Dispositif de suspension selon l'une quelconque des revendications 1 à 6, **caractérisé par** un dimensionnement, dépendant de la charge, de la pression de fonctionnement (p_{A}), de la contre-pression (p_{G}; p_{G1}, p_{G2}) et des surfaces respectives (A1 ainsi que A2 et/ou A3), mises sous charge par ces pressions, du piston (6) et du piston supplémentaire (20) de telle sorte que dans un état statique, mis sous charge, d'une part le piston (6) se trouve en butée terminale de débattement (34) par rapport au cylindre (4) et/ou d'autre part le piston supplémentaire (20) se trouve en butée terminale de compression (36) par rapport au cylindre supplémentaire (18).

8. Dispositif de suspension selon l'une quelconque des revendications 3 à 7, **caractérisé en ce que** l'espace annulaire supplémentaire (26) et/ou l'espace de travail supplémentaire (24) est relié, ou sont respectivement reliés à un accumulateur externe (30).

9. Dispositif de suspension selon l'une quelconque des revendications 1 à 8, **caractérisé en ce que** l'espace annulaire (14) du cylindre de suspension (2) fait partie d'un système d'amortissement hydraulique (38).

10. Dispositif de suspension selon la revendication 9, **caractérisé en ce que** l'espace annulaire (14) est rempli d'un milieu d'amortissement hydraulique (DM) et est relié par l'intermédiaire d'une conduite (44) et d'une soupape d'amortissement (46) à un accumulateur externe (48).

11. Dispositif de suspension selon l'une quelconque des revendications 1 à 8, **caractérisé en ce que** l'espace annulaire (14) du cylindre de suspension (2) est ventilé.
